(19) Europäisches Patentamt
European Patent Office
Office européen des brevets

(11) Veröffentlichungsnummer: **0 332 992 B1**

(12) **EUROPÄISCHE PATENTSCHRIFT**

(45) Veröffentlichungstag der Patentschrift: **04.08.93**

(51) Int. Cl.5: **C08L 69/00**, C08L 67/00, //(C08L69/00,51:04,69:00,67:04), (C08L67/00,51:04,69:00,67:04)

(21) Anmeldenummer: **89103973.7**

(22) Anmeldetag: **07.03.89**

# (54) Thermoplastische Formmassen enthaltend spezielle Copolymere.

(30) Priorität: **17.03.88 DE 3808839**

(43) Veröffentlichungstag der Anmeldung:
**20.09.89 Patentblatt 89/38**

(45) Bekanntmachung des Hinweises auf die Patenterteilung:
**04.08.93 Patentblatt 93/31**

(84) Benannte Vertragsstaaten:
**DE FR GB IT**

(56) Entgegenhaltungen:
**EP-A- 0 096 301**
**EP-A- 0 135 904**
**EP-A- 0 222 234**
**US-A- 4 255 534**
**US-A- 4 699 974**

**DATABASE WPIL, Derwent Publications Ltd., London (GB); Nr. 84-053333&NUM;**

(73) Patentinhaber: **BAYER AG**

**W-5090 Leverkusen 1 Bayerwerk(DE)**

(72) Erfinder: **Leitz, Edgar, Dr.**
**Goethestrasse 63**
**W-4047 Dormagen 1(DE)**
Erfinder: **Eichenauer, Herbert, Dr.**
**Gustav Heinemann-Strasse 3**
**W-4047 Dormagen 1(DE)**
Erfinder: **Ott, Karl-Heinz, Dr.**
**Paul Klee-Strasse 54**
**W-5090 Leverkusen(DE)**
Erfinder: **Peters, Horst, Dr.**
**Winterbergstrasse 25**
**W-5090 Leverkusen 3(DE)**
Erfinder: **Schoeps, Jochen, Dr.**
**Windmühlenstrasse 126**
**W-4150 Krefeld 1(DE)**

**EP 0 332 992 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der europäischen Patentanmeldung EP-A-0 274 123 sind Copolymere mit sequenzartigem Aufbau der idealisierten Formel (I):

$\{A - X - B\}_r$ (I)

mit r = 1 bis 20, insbesondere 1 bis 10, worin

-A- = Polymerisat eines cyclischen Carbonates der allgemeinen Formeln (II) und/oder (III) ("Block A")

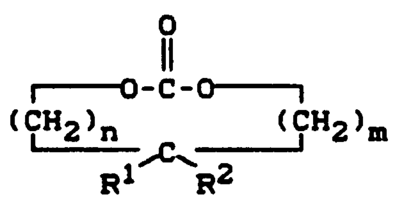

(II)

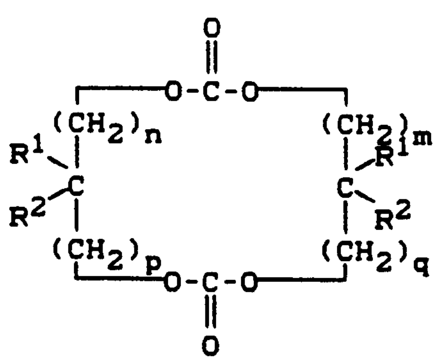

(III)

-B- = Polymerisat eines Lactons der allgemeinen Formel (IV) ("Block B")

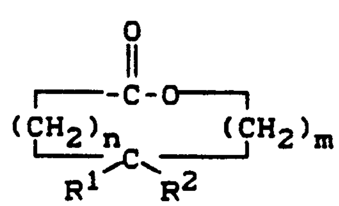

(IV)

X = Mittelstück, enthaltend sowohl das cyclische Carbonat der Formel (II) und/oder (III) als auch das Lacton der Formel (IV) in polymerisierter Form, wobei die Konzentration der Reste von (II) und/oder (III) in Richtung auf -B- und die Konzentration der Reste (IV) in Richtung auf -A- kontinuierlich abnimmt ("tapered structure") wobei in den Formeln (II), (III) und (IV) m, n, p und q unabhängig voneinander 0, 1, 2, 3, 4, 5 oder 6 sind mit den Bedingungen, daß die Summe n + m in (II) mindestens 1, die Summe n + m in (IV) mindestens 1 und die Summen n + p sowie m + q in (III) mindestens 1 betragen, und $R^1$ und $R^2$ = H, $C_{1-6}$-Alkyl, $C_{3-6}$-Alkenyl, $C_{1-6}$-Alk(en)yloxy-$C_{1-6}$-alkyl, insbesondere H, $CH_3$ und $C_2H_5$ bedeuten.

Die mittleren Molekulargewichte der Blöcke A und B sind 500 bis 1.000.000, vorzugsweise 1.000 bis 500.000 und besonders bevorzugt 2.000 bis 250.000; die mittleren Molekulargewichte der Mittelstücke X 300 bis 10.000, vorzugsweise 500 bis 8.000.

Hinzugefügt sei, daß es sich hierbei um Zahlenmittelmolekulargewichte ($\overline{M}n$) handelt, wobei diese sich für die Blöcke A und B aufgrund des Polymerisationsverfahrens (anionische Polymerisation) durch das

Monomer/Initiator-Verhältnis einstellen lassen (siehe z.B. H. G. Elias, "Makromoleküle", Hüthig und Wepfverlag, Basel, Heidelberg (1975), S. 518 ff.).

Gemäß EP-A-0 274 123 sind besonders bevorzugte cyclische Carbonate (II) und (III) Trimethylglykolcarbonat, Neopentylglykolcarbonat, 1,4-Butandiolcarbonat sowie dimere Carbonate des Pentandiols oder des Hexandiols.

Bevorzugtes Lacton (IV) ist ϵ-Caprolacton und/oder Pivalolacton.

In den erfindungsgemäßen Polymeren können die mittleren Molekulargewichte der Blöcke A und B sowie der Mittelstücke X verschieden oder nahezu gleich groß sein.

Die Polymerisate enthalten die Blöcke A und B jeweils in Mengen von 5 bis 95 Gew.-% (bezogen auf Gesamtmenge A + B), vorzugsweise aber in Mengen von 5 bis 80 Gew.-% A und 95 bis 20 Gew.-% B (bezogen auf A + B), sowie 5 bis 80 Gew.-% B und 95 bis 20 Gew.-% A (bezogen auf A + B); der Gehalt an Mittelstücken X mit einer "tapered-structure" beträgt 5 bis 50 Gew.-% (bezogen auf A + B + X), vorzugsweise 5 bis 25 Gew.-% (bezogen auf A + B + X).

Ein weiterer Gegenstand dieser europäischen Patentanmeldung EP-A-0 274 123 ist ein Verfahren zur Herstellung der Copolymeren.

In diesem Verfahren gibt man eine Lösung eines Gemisches aus cyclischen Carbonaten (II) und/oder (III) und Lacton (IV) in einem aromatischen Lösungsmittel oder einem Ether portionsweise (Anzahl der Portionen = r) zu einer Lösung einer Alkylalkalimetall- bzw. Arylalkalimetall-Verbindung als Initiator, polymerisiert bei +20°C bis -78°C, vorzugsweise zwischen +10°C und -30°C, und isoliert danach das Copolymere.

Bevorzugt kann im Anschluß an die Polymerisation das Reaktionsprodukt neutralisiert werden oder das gebildete anionische Polymere mit einem Alkylhalogenid, Carbonsäurechlorid, Carbonsäureanhydrid oder Carbonsäureester umgesetzt werden.

Geeignete aromatische Lösungsmittel sind Benzol, Toluol; ein geeigneter Ether ist Tetrahydrofuran; zum Erzielen bestimmter Molekulargewichte der Copolymeren kann man auch in Gemischen aus aromatischen Kohlenwasserstoffen und Ethern arbeiten. Geeignete Alkylalkalimetallverbindungen bzw. Arylalkalimetallverbindungen sind z.B. Butyllithium, insbesondere sekundär-Butyllithium, Na-Naphthalin und K-Naphthalin.

Nach der Copolymerisation kann das gebildete Polymer neutralisiert oder mit geeigneten Verbindungen umgesetzt werden, die mit Carbanionen reagieren können unter Ausbildung eines ungeladenen stabilen Endproduktes.

Geeignete Neutralisationsmittel sind z.B. schwache anorganische sowie organische Säuren oder saure Salze von Protonensäuren, N-H- und C-H-aciden Säuren; Verbindungen, die mit Carbanionen reagieren können, sind z.B. Alkylhalogenide (insbesondere Methylchlorid, Methyliodid, Benzylchlorid, Benzylbromid), Carbonsäurechloride (insbesondere Benzoylchlorid, Chlorameisensäureester, Phosgen, Acetylchlorid, Caproylchlorid, Stearoylchlorid), Carbonsäureanhydride (insbesondere Acetanhydrid, Bernsteinsäureanhydrid) und Carbonsäureester (insbesondere aktivierte Ester, wie Carbonsäurephenylester, Carbonsäurenitrophenylester sowie Alkylester von Carbonsäuren), wobei die Alkylgruppen gegebenenfalls durch aktivierende Gruppen wie Nitrogruppen, CN-Gruppen, Carboxylgruppen substituiert sein können.

Üblicherweise werden diese Verbindungen am Ende der Copolymerisation dem Reaktionsprodukt zugefügt, vorzugsweise in gelöster Form, wobei auf gute Durchmischung geachtet werden muß. Vorteilhaft ist es, diese Verbindungen in stöchiometrischem Überschuß einzubringen.

Das Copolymer kann aus dem Reaktionsprodukt isoliert werden, gegebenenfalls unter Abtrennung unerwünschter Verunreinigungen.

Dazu kann man das Copolymere aus der Polymerlösung ausfällen und nachträglich durch Waschen reinigen; bevorzugt ist das Copolymer durch Ausdampfen zu isolieren. Während der Ausdampfung oder vor dieser kann das Copolymer gereinigt werden z.B. durch azeotrope Destillation, Extraktion oder fraktionierte Destillation.

Da das Verfahren mit "lebenden" Anionen arbeitet, sind dementsprechende Bedingungen einzuhalten z.B. Wasserfreiheit. Die Wahl der Reaktions-Bedingungen für das erfindungsgemäße Verfahren, insbesondere von Temperatur und Lösungsmittel, ist wichtig, da bei der Polymerisation der cyclischen Monomeren unerwünschte Abbruchreaktionen stattfinden können, durch die die Eigenschaften der Copolymerisate beeinträchtigt werden können.

Die Copolymere gemäß der europäischen Patentanmeldung EP-A-0 274 123 besitzen je nach ihrer Monomerzusammensetzung und der Anzahl der in ihnen enthaltenen Polymerblöcke (d.h. der Anzahl der zur Reaktion gebrachten Monomermischungs-Portionen "r") verschiedene Eigenschaften von kristallin spröde bis amorph kautschukelastisch.

Die Verarbeitung der Copolymeren richtet sich nach ihren Eigenschaften. So können z.B. aus Polymerisaten mit thermoplastischen Eigenschaften mit bekannten Thermoplastverarbeitungsverfahren Formkörper hergestellt werden.

Überraschenderweise sind die neuen Copolymeren bei der Verarbeitung auch über 150 °C noch ausreichend stabil und zeigen keinen molekularen Abbau. Deshalb haben daraus hergestellte Formkörper sehr gute mechanische Eigenschaften, die auch nach mehrmaliger Temperaturbelastung erhalten bleiben.

Die Copolymeren gemäß der europäischen Patentanmeldung EP-A-0 274 123 eignen sich vorzugsweise - je nach ihrem chemischen Aufbau - zur Herstellung von Folien, Dichtungen, Beschichtungen, insbesondere dort, wo verbessertes Langzeitverhalten gebraucht wird; sie sind ebenfalls geeignet zur Herstellung von harzartigen, thermoplastischen Verpackungsmaterialien, insbesondere für Lebensmittel.

Die Copolymere lassen sich in bekannter Weise stabilisieren, pigmentieren und mittels üblicher Additive antistatisch ausrüsten, besser verarbeitbar oder flammfest machen oder mit Füllstoffen füllen.

Beispiele

Beispiel 1 gemäß europäischer Patentanmeldung EP-A-0 274 123

Herstellung eines Copolymeren aus Neopentylglykolcarbonat und ϵ-Caprolacton (50 Mol-%:50 Mol-%)

$\{A - X - B\}_1$

(A = Polyneopentylglykolcarbonat-Block,
B = Poly-ϵ-Caprolacton-Block
X = Mittelstück aus Neopentylglykolcarbonat- und ϵ-Caprolacton-Einheiten)

Zu einer Lösung von 0,2 ml sek.-Butyllithium (1,4 m Lösung in Cyclohexan) in 10 ml Toluol wurde bei -10 °C eine Lösung von 10,2 g Neopentylglykolcarbonat und 8,9 g ϵ-Caprolacton in 100 ml Toluol gegeben. Nach 160 Minuten war ein Umsatz von 90 % erreicht; die Zersetzung des Reaktionsgemisches erfolgte mit 10 ml Methanol/Salzsäure (Gewichtsverhältnis 9:1). Das Reaktionsprodukt wird durch Fällung mit 250 ml Methanol isoliert.

Beispiel 2

Herstellung eines Copolymeren aus Neopentylglykolcarbonat und ϵ-Caprolacton (50 Mol-%:50 Mol-%)

$\{A - X - B\}_2$

(Zur Bedeutung von A, X und B siehe Beispiel 1).

Zu einer Lösung von 0,2 ml sek.-Butyllithium (1,4 m Lösung in Cyclohexan) in 10 ml Toluol wurde bei -10 °C eine Lösung von 5,35 g Neopentylglykolcarbonat und 4,7 g ϵ-Caprolacton in 50 ml Toluol gegeben und 120 Minuten bei dieser Temperatur gerührt. Danach wurde eine weitere Lösung von 5,35 g Neopentylglykolcarbonat und 4,7 g ϵ-Caprolacton in 50 ml Toluol zugegeben und wieder 120 Minuten bei -10 °C reagieren gelassen. Die Aufarbeitung erfolgte durch Zersetzung des Reaktionsgemisches mit 10 ml Methanol/Salzsäure (Gewichtsverhältnis 9:1) und Fällung mit 250 ml Methanol.

Beispiel 3

Herstellung eines Copolymeren aus Neopentylglykolcarbonat und ϵ-Caprolacton (50 Mol-%:50 Mol-%)

$\{A - X - B\}_3$

(Zur Bedeutung von A, X und B siehe Beispiel 1).

Es wird eine Lösung von 10,6 g Neopentylglykolcarbonat und 9,3 g ϵ-Caprolacton in 100 ml Toluol hergestellt und auf -10 °C abgekühlt. Ein Drittel der Lösung wird ins Reaktionsgefäß zu 0,2 ml sek.-Butyllithium (1,4 m Lösung in Cyclohexan) in 10 ml Toluol gegeben und 70 Minuten bei -10 °C gerührt. Danach wird das zweite Drittel der Lösung zugegeben und nach weiteren 120 Minuten das letzte Drittel, welches man nochmals 120 Minuten lang reagieren läßt. Die Aufarbeitung erfolgte durch Zersetzung des Reaktionsgemisches mit 10 ml Methanol/Salzsäure (Gewichtsverhältnis 9:1) und Fällung mit 220 ml

Methanol.

Beispiel 4

Herstellung eines Copolymeren aus Neopentylglykolcarbonat und ε-Caprolacton (60 Mol-%:40 Mol-%)

$\{A - X - B\}_1$

Zu einer Lösung von 0,4 ml sek.-Butyllithium (1,4 m Lösung in Cyclohexan) in 10 ml Toluol wurde bei -10 °C eine Lösung von 15,6 g Neopentylglykolcarbonat und 9,1 g ε-Caprolacton in 120 ml Toluol gegeben. Nach 160 Minuten ist ein Umsatz von 86 % erreicht. Nach Zersetzung mit 10 ml Methanol/Salzsäure (Gewichtsverhältnis 9:1) wird das Reaktionsprodukt durch Fällung mit 260 ml Methanol isoliert.

Beispiel 5

Herstellung eines Copolymeren aus Neopentylglykolcarbonat und ε-Caprolacton (30 Mol-%:70 Mol-%)

$\{A - X - B\}_1$

Zu einer Lösung von 0,4 ml sek.-Butyllithium (1,4 m Lösung in Cyclohexan) in 10 ml Toluol wurde bei -10 °C eine Lösung von 7,8 g Neopentylglykolcarbonat und 15,96 g ε-Caprolacton in 95 ml Toluol gegeben. Nach 160 Minuten beträgt der Umsatz >95 %. Die Aufarbeitung erfolgt wie in Beispiel 4 beschrieben.

Beispiel 6

Herstellung eines Copolymeren aus Neopentylglykolcarbonat und ε-Caprolacton (80 Mol-%:20 Mol-%)

$\{A - X - B\}_1$

Zu einer Lösung von 0,4 ml sek.-Butyllithium (1,4 m Lösung in Cyclohexan) in 10 ml Toluol wurde bei -10 °C eine Lösung von 20,8 g Neopentylglykolcarbonat und 4,56 g ε-Caprolacton in 80 ml Toluol gegeben. Nach 160 Minuten beträgt der Umsatz >95 %. Die Aufarbeitung erfolgt wie in Beispiel 4 beschrieben.

Überraschenderweise wurde nun gefunden, daß man derartige Copolymere, wie sie in der europäischen Patentanmeldung EP-A-0 274 123 offenbart sind, mit thermoplastischen, aromatischen Polycarbonaten und/oder mit thermoplastischen, aromatischen Polyesteren zu und mit Pfropfpolymerisaten und gegebenenfalls mit thermoplastischen Copolymerisaten Mischungen mit interessanten Eigenschaften legieren kann.

Gegenstand der vorliegenden Erfindung sind somit Mischungen enthaltend:

1.) thermoplastische aromatische Polycarbonate und/oder thermoplastische, aromatische Polyester,

2.) Pfropfpolymerisate, erhältlich durch Pfropfung von 2.1.) 5 bis 90 Gew.-Teilen einer Mischung aus

2.1.1.) 50 bis 95 Gew.-Teilen Styrol, α-Methylstyrol, kernsubstituiertem Styrol, Methylmethacrylat oder Mischungen daraus und

2.1.2.) 50 bis 5 Gew.-Teilen Acrylnitril, Methacrylnitril, Methylmethacrylat, Maleinsäureanhydrid, N-substituiertem Maleinimid oder Mischungen daraus auf

2.2.) 95 bis 10 Gew.-Teile eines Kautschuks mit einer Glastemperatur $T_G \leq 10\,°C$,

3.) spezielle Copolymere und gegebenenfalls

2a) thermoplastische Copolymerisate, erhältlich durch Copolymerisation von

2.a.1.) 50 bis 95 Gew.-Teilen Styrol, α-Methylstyrol, kernsubstituiertem Styrol, Methylmethacrylat oder Mischungen daraus mit

2.a.2.) 50 bis 5 Gew.-Teilen Acrylnitril, Methacrylnitril, Methylmethacrylat, N-substituiertem Maleinimid oder Mischungen daraus,

dadurch gekennzeichnet, daß die Copolymeren gemäß Komponente 3.) der Formel (Ia) entsprechen,

$\{A - X - B\}_r$ (Ia)

worin r eine ganze Zahl von 1 bis 20, vorzugsweise von 1 bis 10 ist,

-A- Polymerisate cyclischer Carbonate der Formel (V)

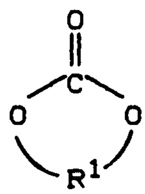

(V)

und/oder der Formel (VI)

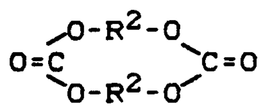

(VI)

darstellt,

-B- Polymerisate von Lactonen der Formel (VII)

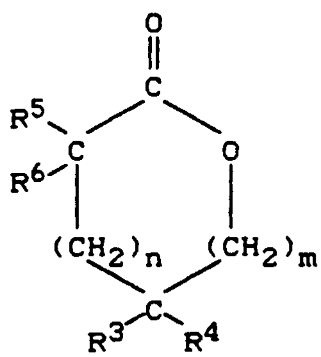

(VII)

darstellt und

-X- Polymerisate darstellt, die sowohl die Carbonate (V) und/oder (VI) als auch die Lactone (VII) in polymerisierter Form enthalten, wobei die Konzentration der polymerisierten Carbonate (V) und/oder (VI) jeweils in Richtung auf die Blöcke -B- und die Konzentration der polymerisierten Lactone (VII) jeweils in Richtung auf die Blöcke -A- kontinuierlich abnimmt ("tapered structure").

$R^1$ in (V) ist ein lineares $C_3$-$C_{10}$-Alkylen, oder ein Rest der Formeln a) bis l):

a) $-CH_2CH_2CH(CH_3)-$

b) $-CH_2CH_2OCH_2CH_2OCH_2CH_2-$,

c) $-CH_2CH(CH_3)CH_2CH_2C(CH_3)_2CH_2-$,

d) 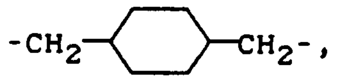 e) 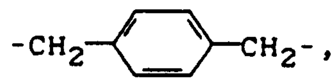

f) 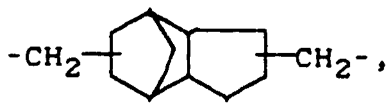

g) 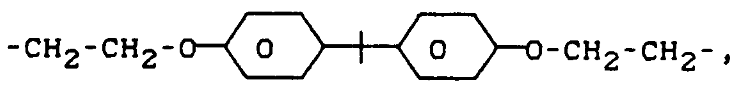

h) 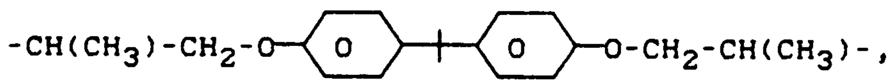

i) 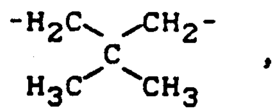 j) 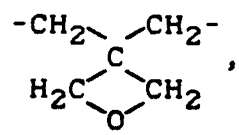

k) 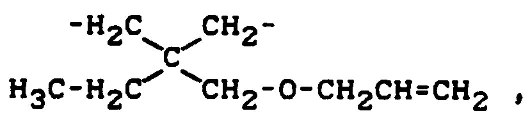

l) 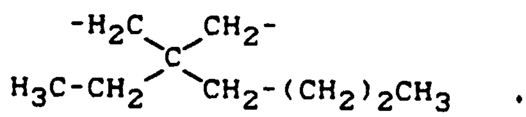

$R^2$ in (VI) ist ein lineares $C_4$-$C_{12}$-Alkylen oder ein Rest der Formeln m) oder b)

m) $-CH_2-CH_2-O-CH_2-CH_2-$ oder

b) $-CH_2-CH_2-O-CH_2-CH_2-O-CH_2-CH_2-$.

$R^3$, $R^4$, $R^5$ und $R^6$ in (VII) sind gleich oder verschieden und H, $C_1$-$C_6$-Alkyl, $C_3$-$C_6$-Alkylen, $C_1$-$C_6$-Alkoxy und $C_2$-$C_6$-Alkylenoxy-$C_1$-$C_6$-alkyl, vorzugsweise H, $CH_3$ und $C_2H_5$; "m" und "n" in (VII) sind unabhängig voneinander 0, 1, 2, 3, 4, 5 oder 6.

Bevorzugt einzusetzende Carbonate (V) und (VI) sind Trimethylenglykolcarbonat, Neopentylglykolcarbonat, 1,4-Butandiolcarbonat, das dimere Carbonat des Pentandiols und der dimere Carbonat des Hexandiols, wobei Neopentylglykolcarbonat besonders bevorzugt ist. Bevorzugte Lactone(VII) sind $\epsilon$-Caprolacton und Pivalolacton.

In den erfindungsgemäß als Komponente 3.) der Mischung einzusetzenden Copolymeren der Formel (Ia) können die mittleren Molekulargewichte der Blöcke -A- und -B- und der Polymerisate -X- gleich oder verschieden sein. Die mittleren Molekulargewichte (Mn, Zahlenmittel) der Blöcke A und B lassen sich bedingt durch das Polymerisationsverfahren (anionische Polymerisation) durch das Monomer/Initiator-Verhältnis einstellen (s. z.B. Hüthig und Wepfverlag, Basel, Heidelberg (1975), S. 519 ff). Die mittleren Molekulargewichte ($\overline{M}$n) für -A- liegen zwischen 1.000 und 500.000, vorzugsweise zwischen 2.000 und 250.000, für -B- zwischen 1.000 und 500.000, vorzugsweise zwischen 2.000 und 250.000, für -X- zwischen 300 und 10.000, vorzugsweise zwischen 500 und 8.000.

Die Polymerisate enthalten die Blöcke A und B jeweils in Mengen von 5 bis 95 Gew.-% (bezogen auf Gesamtmenge , A + B), vorzugsweise aber in Mengen von 5 bis 80 Gew.-% A und 95 bis 20 Gew.-% B (bezogen auf A + B) sowie 5 bis 80 Gew.-% B und 95 bis 20 Gew.-% A (bezogen auf A + B); der Gehalt an Mittelstücken X mit einer "tapered-structure" beträgt 5 bis 50 Gew.-% (bezogen auf A + B + X),

vorzugsweise 5 bis 25 Gew.-% (bezogen auf A + B + X).

Die erfindungsgemäß als Komponente 3.) der Mischung einzusetzenden Copolymeren der Formel (Ia) lassen sich gemäß europäischer Patentanmeldung EP-A-0 274 123 herstellen, das gilt auch für diejenigen Copolymeren der Formel (Ia), die noch nicht in dieser europäischen Patentanmeldung unter der Formel (I) erfaßt sind.

Die Herstellung der Copolymeren (Ia) erfolgt durch anionische, ringöffnende Lösungspolymerisation der Carbonate (V) und (VI) und der Lactone (VII), wobei für die Synthese der Copolymeren (Ia), in denen r größer 1 ist, also der Copolymere der Struktur
-A-X-B-A-X-B- oder -A-X-B-A-X-B-A-X-B-
eine stufenweise Reaktion unter stufenweiser Zugabe der Reaktanten der Formeln (V) und/oder (VI) und (VII) zu den jeweils bereits gebildeten Copolymeren -A-X-B- bzw. -A-X-B-A-X-B- erforderlich ist.

Im allgemeinen erfolgt die Herstellung der Copolymeren der Formel (Ia) wie folgt.

Eine Lösung eines Gemisches aus cyclischen Carbonaten (V) und/oder (VI) und Lacton (VII) in einem unprotischen aromatischen oder aliphatischen Lösungsmittel oder Ether wird durch Zugabe einer Lösung einer Alkylalkalimetall-bzw. Arylalkalimetallverbindung oder Alkalialkylalkoholatverbindung als Initiator bei -78 °C bis +30 °C, vorzugsweise bei -30 °C bis + 20 °C, polymerisiert, wobei zuerst der Block A und dann das getaperte Übergangssegment X und dann der Block B aufgebaut wird. Nach Umsatz der Monomeren weist das Copolymer die Struktur A - X - B auf und ist weiterhin polymerisationsaktiv.

Wird das Copolymer der Struktur A-X-B gewünscht, so wird das Copolymer neutralisiert unter Verlust der Polymerisationsaktivität und isoliert.

Wird ein Copolymer der Struktur $(A\text{-}X\text{-}B)_2$ gewünscht, so unterbleibt die Neutralisation des Copolymeren.

Durch Zugabe einer weiteren Lösung aus cyclischen Carbonaten (V) und/oder (VI) und Lacton (VII) zu der polymerisationsaktiven Lösung des Copolymeren A-X-B erfolgt nun ein neuer Blockaufbau von A (Cololymerstruktur: A-X-B-A), dann Aufbau von X (Copolymerstruktur: A-X-B-A-X) und dann von B. Das Copolymer liegt nun in seiner polymerisationsaktiven Form A-X-B-A-X-B vor.

Wird das Copolymer dieser Struktur gewünscht, so wird das Copolymer neutralisiert und isoliert.

Wird ein Copolymer der Struktur $(A\text{-}X\text{-}B)_3$ gewünscht, so unterbleibt wiederum die Neutralisation des Copolymeren. Durch Zugabe einer weiteren Lösung aus cyclischen Carbonaten (V) und/oder (VI) und Lacton (VII) zu der polymerisationsaktiven Lösung des Copolymeren A-X-B-A-X-B erfolgt wiederum ein Blockaufbau von A (Copolymerstruktur: A-X-B-A-X-B-A) dann Aufbau von X (Copolymerstruktur: A-X-B-A-X-B-A-X) und dann Aufbau von B. Das Copolymer liegt nun in seiner polymerisationsaktiven Form A-X-B-A-X-B-A-X-B vor.

Das Copolymer kann nun neutralisiert und isoliert werden. Durch Zugabe einer weiteren Lösung aus cyclischen Carbonaten (V) und/oder (VI) und Lacton (VII) läßt sich das Copolymer der Struktur $(A\text{-}X\text{-}B)_4$ herstellen; entsprechendes gilt, wenn r 5, 6 oder eine andere ganze Zahl bis 20 ist.

Erfindungsgemäß geeignete, thermoplastische, aromatische Polycarbonate gemäß Komponente 1) sind solche auf Basis der Diphenole der Formel (VIII)

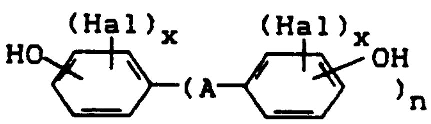

(VIII),

worin

A eine Einfachbindung, $C_1$-$C_5$-Alkylen, $C_2$-$C_5$-Alkyliden, ein $C_5$-$C_6$-Cycloalkyliden, -S-, $-SO_2-$ oder ein Rest

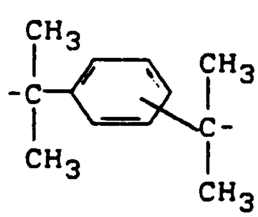

ist,

Hal Chlor oder Brom ist,

x 0, 1 oder 2 und

n 1 oder 0 sind,

und gegebenenfalls zusätzlich der Formel (VIIIa)

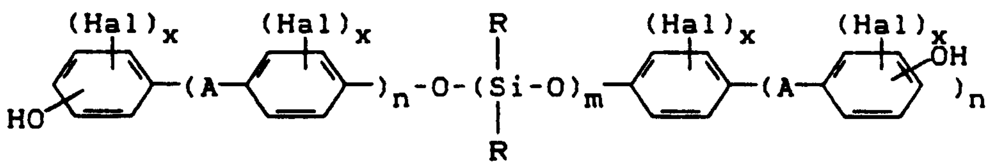

(VIIIa)

worin

A, Hal, x und n die für die Formel (VIII) genannte Bedeutung haben, die Reste R gleich oder verschieden sind und lineares $C_1$-$C_{10}$-Alkyl, verzweigtes $C_3$-$C_{20}$-Alkyl, $C_6$-$C_{20}$-Aryl, vorzugsweise $CH_3$, entsprechen und m eine ganze Zahl zwischen 5 und 100, vorzugsweise zwischen 20 und 80 ist.

Die Diphenole der Formel (VIII) sind bekannt oder nach bekannten Verfahren herstellbar; Polydiorganosiloxane mit Hydroxy-aryloxy-Endgruppen gemäß Formel (VIIIa) sind ebenfalls bekannt (vergleiche US-PS 3 419 634) oder nach bekannten Verfahren herstellbar.

Geeigente Diphenole der Formel (VIII) sind

Hydrochinon,

Resorcin,

Dihydroxdiphenyle,

Bis-(hydroxyphenyl)-alkane,

Bis-(hydroxyphenyl)-cycloalkane,

Bis-(hydroxyphenyl)-sulfide,

Bis-(hydroxyphenyl)-sulfone und

$\alpha,\alpha'$-Bis-(hydroxphenyl)-diisopropylbenzole

sowie deren kernchlorierte und kernbromierte Derivate.

Beispiele für geeignete Diphenole der Formel (VIII) sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan und 2,2-Bis-(3,5-dibrom-4-hydroxyphenyl)-propan.

Bevorzugte Diphenole der Formel (VIII) sind 2,2-Bis-(4-hydroxyphenyl)-propan,2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Besonders geeignete Diphenole der Formel (VIIIa) sind solche, in denen R = Methyl, Ethyl, Propyl, n-Butyl, tert.-Butyl oder Phenyl ist, insbesondere solche der Formel (VIIIb)

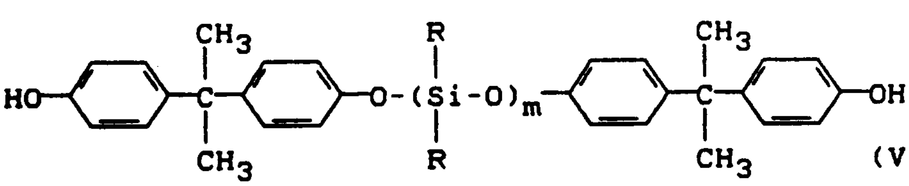

(VIIIb)

worin

die Reste R gleich sind und die vorstehend genannte Bedeutung haben, und m eine ganze Zahl von 5-100, vorzugsweise von 20 bis 80 ist.

Die Diphenole der Formel (VIIIa) können z.B. aus den entsprechenden Bis-chlorverbindungen der Formel (IX)

$$Cl-(\underset{R}{\overset{R}{|}}\!\!\!\!\!\!SiO)_m-\underset{R}{\overset{R}{|}}\!\!\!\!\!\!Si-Cl \qquad (IX)$$

und den Diphenolen (VIII) z.B. gemäß US-Patent 3 419 635, Spalte 3, in Kombination mit US-Patent 3 189 662 hergestellt werden.

In den Bis-chlorverbindungen (IX) haben R und m die Bedeutung wie in den Diphenolen (VIIIa) bzw. (VIIIb).

Erfindungsgemäß geeignete Polycarbonate gemäß Komponente 1.) sind Homopolycarbonate aus einem Diphenol und Copolycarbonate aus mehreren Diphenolen, wobei die Diphenole der Formel (VIIIa) nur für die Herstellung von Copolycarbonaten mit den Diphenolen der Formel (VIII) eingesetzt werden, und zwar in einer Gewichtsmenge von 1-50 Gew.-%, vorzugsweise von 1,5-25 Gew.-% und insbesondere von 2 bis 10 Gew.-%, bezogen auf die Gewichtssumme der eingesetzten Diphenole der Formeln (VIII) und (VIIIa).

Erfindungsgemäß geeignete Polycarbonate gemäß Komponente 1.) sind auch Mischungen aus einem Copolycarbonat aus den Diphenolen der Formeln (VIIIa) und (VIII) und einem anderen siloxanfreien thermoplastischen Polycarbonat, wobei der Gehalt an Diphenolen der Formeln (VIIIa) in der Polycarbonatmischung, bezogen auf die Gesamtsumme an Diphenolen, wiederum von 1-50 Gew.-% liegt.

Bevorzugte Polycarbonate sind neben dem Bisphenol A-Homopolycarbonat die Copolycarbonate von Bisphenol A mit bis zu 15 Mol-%, bezogen auf die Mol-Summe an Diphenolen, an 2,2-Bis-(3,5-dibrom-4-hydroxyphenyl)-propan und die Copolycarbonate der Diphenole der Formel (VIII) mit 1-50 Gew.-% an Diphenolen der Formel (VIIIa), vorzugsweise der Formel (VIIIb), bezogen jeweils auf die Gewichtssumme der Diphenole (VIII) und (VIIIa) bzw. (VIII) und (VIIIb).

Die erfindungsgemäß geeigneten Polycarbonate gemäß Komponente 1.) können in bekannter Weise verzweigt sein, und zwar vorzugsweise durch den Einbau von 0,05-2,0 Mol-%, bezogen auf die Summe der eingesetzten Diphenole, an drei- oder mehr als dreifunktionellen Verbindungen, z.B. solchen mit drei oder mehr als drei phenolischen Gruppen.

Die Herstellung der erfindungsgemäß geeigneten Polycarbonate gemäß Komponente 1.) ist bekannt und kann z.B. mit Phosgen nach dem Phasengrenzflächenverfahren oder mit Phosgen nach dem Verfahren in homogener Phase ("Pyridinverfahren") erfolgen, wobei das Molekulargewicht durch eine entsprechende Menge an bekannten Kettenabbrechern eingestellt werden kann (bezüglich polydiorganosiloxanhaltiger Polycarbonate siehe DE-OS 3 334 872.

Die erfindungsgemäß geeigneten Polycarbonate gemäß Komponente 1.) haben mittlere Gewichtsmittelmolekulargewichte ($M_w$, gemessen durch Ultrazentrifugation oder Streulichtmessung) von 10.000-200.000, vorzugsweise von 20.000-80.000.

Geeignete Kettenabbrecher zur Einstellung der Molekulargewichte der Polycarbonate gemäß Komponente 1.) sind z.B. Phenol, p-Chlorphenol, p-tert.-Butylphenol, 2,4,6-Tribromphenol, langkettige Alkylphenole, wie 4-81,3-(Tetramethylbutyl)-phenol (DE-OS 2 842 005), Monoalkylphenole und Dialkylphenole mit insgesamt 8-20 C-Atomen in den Alkylsubstituenten, wie 3,5-di-tert.-Butylphenol, p-Isooctylphenol, p-tert.-Octylphenol, p-Dodecylphenol und 2-)3,5-Dimethyl-heptyl)-phenol und 4-(3,5-Dimethylheptyl)-phenol (DE-OS 3 506 472).

Die Menge an Kettenabbrecher beträgt jeweils 0,1 bis 10 Mol-%, bezogen im Falle der phenolischen Kettenabbrecher auf Mole Diphenole und Falle von Monocarbonsäurechlorid-Kettenabbrechern auf Mole Dicarbonsäuredichloride.

Erfindungsgemäß geeignete, thermoplastische, aromatische Polyester gemäß Komponente 1.) sind thermplastische aromatische Polyester(carbonate) auf Basis von $C_6$-$C_{30}$-Diphenolen, aromatischen $C_8$-$C_{14}$-Dicarbonsäuren, Kettenabbrechern und gegebenenfalls Kohlensäurehalogeniden und/oder Verzweigern.

Polyester(carbonate) im Sinne vorliegender Erfindung sind somit aromatische, gegebenenfalls verzweigte Polyester, die außerdem noch Carbonat-Bindeglieder enthalten können, wobei die Carbonat-Bindeglieder in der Polykondensatkette maximal 99 Mol-%, vorzugsweise 80 Mol-% und insbesondere 50 Mol-%, bezogen auf die Mol-Summe der Ester- und Carbonat-Bindeglieder in der Polykondensatkette betragen, und wobei somit die Ester-Bindeglieder mindestesn 1 Mol-%, vorzugsweise 20 Mol-% und insbesondere 50 Mol-%, bezogen auf die Mol-Summe der Ester- und Carbonat-Bindeglieder in der Polykondensatkette betragen.

Geeignete $C_6$-$C_{30}$-Diphenole sind die für die Polyarbonate genannten der Formel (VIII).

Bevorzugte $C_6$-$C_{30}$-Diphenole sind ebenfalls die bevorzugten der Formel (VIII).

Geeignete aromatische Dicarbonsäuren sind beispielsweise Isophthalsäure, Terephthalsäure, Diphenylether-4,4'-dicarbonsäure und Naphthalin-2,6-dicarbonsäure.

Bevorzugte aromatische Dicarbonsäuren sind Isophthalsäure, Terephthalsäure und deren Gemische im Verhältnis zwischen 1:20 und 20:1.

Die Dicarbonsäuren werden in Form der Dicarbonsäuredichloride in die Polyester bzw. in die Polyestercarbonate eingebaut.

Geeignete Kettenabbrecher sind die bereits für die Polycarbonatherstellung genannten phenolischen. Darüberhinaus sind Chlorkohlensäureester dieser phenolischen Kettenabbrecher geeignet. Geeignete Kettenabbrecher sind außerdem Säurechloride von aromatischen Monocarbonsäure, beispielsweise Benzoylchlorid. Geeignete Kettenabbrecher sind außerdem Säurechloride von aliphatischen $C_2$-$C_{22}$-Acetylchlorid.

Die Menge an einzusetzenden Kettenabbrecher beträgt zwischen 0,1 und 10 Mol-%, wobei im Falle von phenolischen Kettenabbrechern die Menge auf Mole Diphenole bezogen wird und im Falle von Säurechlorid-Kettenababrechern die Menge auf Mole Dicarbonsäuredichloride bezogen wird.

Bevorzugtes Kohlensäurehalogenid ist $COCl_2$.

Mögliche Verzweigungsmittel sind in den DE-OS 2 940 024 und 3 007 934 genannt.

Die Herstellung sowohl der erfindungsgemäß geeigneten Polyester als auch der erfindungsgemäß geeigneten Polyestercarbonate ist bekannt.

(Siehe dazu beispielsweise wiederum DE-OS 2 940 024 und DE-OS 3 007 934 sowie die deutschen Offenlegungsschriften 2 232 877, 2 703 376, 3 000 610 und 2 714 544 und die DE-AS 1 495 626). Besonders bevorzugt ist das Phasengrenzflächenverfahren.

Am Aufbau der erfindungsgemäß geeigneten Polyester(carbonate) gemäß Komponente 1.) können auch bis jeweils 30 Mol-% der Dicarbonsäuren und Dihydroxyverbindungen aliphatische Baugruppen, z.B. Adipinsäure, Butandiol-1,4-beteiligt sein.

Die erfindungsgemäß geeigneten Polyester(carbonate) gemäß Komponente 1.) können auch aromatische Hydroxycarbonsäure, also beispielsweise p-Hydroxybenzoesäure, eingebaut enthalten, wobei dies unter Anrechnung auf die Diphenol- und der Dicarbonsäure-Bausteine in bekannter Weise erfolgt. 1 Mol aromatischer Hydroxycarbonsäure substituiert somit jeweils 1/2 Mol an Dicarbonsäure und 1/2 Mol an Diphenol.

In den Polyestercarbonaten gemäß Komponente 1.) können die Estergruppen und die Carbonatgruppen statistisch verteilt oder auch in Blöcken angeordnet sein.

Die erfindungsgemäß geeigneten thermoplastischen aromatischen Polyester gemäß Komponente 1.) haben relative Lösungsviskositäten ($\pi_{rel}$) im Bereich von 1,18 bis 1,4, vorzugsweise 1,22 bis 1,3 (gemessen an Lösungen von 0,5 g Polyester in 100 ml $CH_2Cl_2$-Lösung bei 25 ° C).

Erfindungsgemäß geeignete Pfropfpolymerisate gemäß Komponente 2.) sind erhältlich durch Pfropfung von

2.1.) 5 bis 90 Gew.-Teilen, vorzugsweise 30 bis 80 Gew.-Teilen einer Mischung aus

2.1.1.) 50 bis 95 Gew.-Teilen Styrol, $\alpha$-Methylstyrol, kernsubstituiertem Styrol, Methylmethacrylat oder Mischungen daraus, und

2.1.2.) 50 bis 5 Gew.-Teilen Acrylnitril, Methacrylnitril, Methylmethacrylat, Maleinsäureanhydrid, N-substituiertem Maleinimid oder Mischungen daraus, auf

2.2.) 95 bis 10 Gew.-Teile, vorzugsweise 70 bis 20 Gew.-Teile eines Kautschuks mit einer Glastemperatur $T_G \leqq 10$ ° C.

Zur Herstellung der Pfropfpolymerisate 2.) geeignete Kautschuke sind insbesondere Polybutadien, Butadien/Styrol-Copolymerisate mit bis zu 30 Gew.-%, bezogen auf Kautschuk, eines niederen Alkylesters der Acryl-oder Methacrylsäure (z.B. Methylmethacrylat, Ethylacrylat, Methacrylat oder Ethylmethacrylat), Polyisopren, Polychloropren, Alkylacrylatkautschuke auf der Basis von $C_1$-$C_8$-Alkylarylaten, insbesondere Ethyl-, Butyl-, Ethylhexylacrylat. Die Alkylacrylatkautschuke können gegebenenfalls bi szu 30 Gew.-% bezogen auf Kautschuk, Monomere, wie Vinylacetat, Acrylnitril, Styrol, Methylmethacrylat und/oder Vinylether copolymerisiert enthalten. Sie können kleinere Mengen, vorzugsweise ist zu 5 Gew.-%, bezogen auf Kautschuk, vernetzend wirkender ethylenisch ungesättigter Monomeren einpolymerisiert enthalten.

Solche Vernetzer sind z.B. Alkylendiol-di-(meth)-acrylate, Polyesterdi-(meth)-acrylate, Divinylbenzol, Trivinylbenzol, Triallylcyanurat, Allyl-(meth)-acrylat, Butadien und Isopren. Geeigente Acrylatkautschuke sind auch Produkte, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern und einen Acrylatkautschukmantel enthalten. Andere geeignete Kautschuke sind z.B. EPDM-Kautschuke, also Kautschuke aus Ethylen, Propylen und einem unkonjugierten Dienmonomer, und Silikonkautschuke.

Bevorzugte Kautschuke zur Herstellung der Pfropfpolymerisate 2.) sind Dien-, Alkylacrylat- und Silikonkautschuke.

Die Kautschuke liegen im Pfropfpolymerisat 2.) in Form wenigstens partiell vernetzter Teilchens eines mittleren Durchmessers von 0,09-5 µm, insbesondere 0,1-1 µm vor. Die Pfropfpolymerisate 2.) können durch radikalische Pfropfpolymerisation der vorstehend definierten Monomerengemische 2.1.) in Gegenwart der zu pfropfenden Kautschuke 2.2.) hergestellt werden. Bevorzugte Herstellungsverfahren für die Pfropfpolymerisate 2.) sind Emulsions-, Lösungs-, Masse- oder Suspensionspolymerisation. Besonders bevorzugte Pfropfpolymerisate 2.) sin ABS-Pfropfpolymerisate. Als kernsubstituierte Styrole seien Halogenstyrole und p-Methylstyrol erwähnt.

Erfindungsgemäß geeignete thermoplastische Copolymerisate gemäß Komponente 2a) sind erhältlich durch Copolymerisation von

2a.1.) 50 bis 95 Gew.-Teilen Styrol, α-Methylstyrol, kernsubstituiertem Styrol, Methylmethacrylat oder Mischungen daraus, mit

2a.2.) 50 bis 5 Gew.-Teilen Acrylnitril, Methacrylnitril, Methylmethacrylat, N-substituiertem Maleinimid oder Mischungen daraus.

Bevorzugte Copolymerisate 2a) sind solche aus wenigstens einem der Monomeren Styrol, α-Methylstyrol, kernsubstituiertem Styrol gemäß 2a.1.) mit wenigstens einem der Monomeren Acrylnitril, Methacrylnitril, Methylmethacrylat, Maleinsäureanhydrid, N-subst.-Maleinimid gemäß 2a.2.).

Die Gewichtsteile der Komponenten 1), 2), 3) und 2a) in den erfindungsgemäßen thermoplastischen Formmassen betragen für die Komponente 1) 15 bis 97,5 Gew.-Teile, vorzugsweise 35 bis 90 Gew.-Teile, für die Komponente 2) 2 bis 50 Gew.-Teile, vorzugsweise 5 bis 35 Gew.-Teile, für die Komponente 3) 0,5 bis 45 Gew.-Teile, vorzugsweise 1 bis 35 Gew.-Teile, und insbesondere 1,5 bis 22 Gew.-Teile, und für die Komponente 2a) 0 bis 50 Gew.-Teile, vorzugsweise 0 bis 30 Gew.-Teile, wobei die Summe der Gew.-Teile aus den Komponenten 1.), 2.), 3.) und gegebenenfalls 2.a.) jeweils 100 ist.

Copolymerisate 2.a.) entstehen häufig bei der Pfropfpolymerisation zur Herstellung der Komponente 2) als Nebenprodukte, besonders dann, wenn große Mengen Monomere auf kleinen Mengen Kautschuk gepfropft werden.

Die erfindungsgemäß einzusetzende Menge an Copolymerisat 2a) von 0 bis 50 Gew.-Teile, bezogen auf 100 Gew.-Teile des Gemisches aus 1. + 2. + 2a. + 3., bezieht diese Nebenprodukte der Pfropfpolymerisation nicht mit ein.

Die Copolymerisate 2.a.) sind harzartig, thermoplastisch und kautschukfrei. Besonders bevorzugte Copolymerisate 2.a.) sind solche aus Styrol und/oder α-Methylstyrol mit Acrylnitril und gegebenenfalls mit Methylmethacrylat.

Besonders bevorzugte Gewichtsverhältnisse im thermoplastischen Copolymerisat 2.a.) sind 60-80 Gew.-% 2.a.1.) und 40-20 Gew.-% 2.a.2.).

Die Copolymerisate 2.a.) können durch radikalische Polymerisation, insbesodnere durch Emulsions-, Suspensions-, Lösungs- oder Massepolymerisation hergestellt werden. Sie besitzen vorzugsweise Molekulargewichte $M_w$ (Gewichtsmittel, ermittelt durch Lichtstreuung oder Sedimentation) von 15.000-200.000.

Thermoplastische Formmassen aus aromatischen Polycarbonat, Pfropfpolymerisat und gegebenenfalls harzartigen Copolymerisaten, aufgebaut aus Vinylverbindungen sind seit langem bekannt. Sie zeichnen sich durch ein ausgewogenes Eigenschaftsprofil in Bezug auf Zähigkeit und Wärmeformbeständigkeit aus:

Für die Herstellung von großformatigen und komplizierten Teilen, wobei lange Fließwege vorgegeben sind, ist die Fließfähigkeit der Materialien oft nicht ausreichend. Das vollständige und rasche Ausfüllen der Spritzformen ist in solchen Fällen noch verbesserungsbedürftig.

Weiterhin zeigen aromatische Polycarbonat/ABS-Formmassen im allgemeinen nur eine ungenügende Beständigkeit gegenüber Chemikalien, insbesondere organischen Lösungsmitteln und Lösungsmittelgemischen wie Benzin. Die Formmassen sind daher für Anwendungen, wie Teile für die Kfz-Industrie im Karosserieaußenbereich, wo eine Kraftstoffresistenz unbedingt erforderlich ist, nur mit starken Einschränkungen verwendbar.

Es hat sich nun gezeigt, das die erfindungsgemäßen Formmassen in Abhängigkeit ihrer Zusammensetzung ausgezeichnete Zähigkeit und gute Beständigkeit gegenüber organischen Lösungsmitteln verbunden mit hoher Fließfähigkeit besitzen.

Die erfindungsgemäßen Formmassen können weitere, für Polycarbonate oder Pfropfpolymerisate und Copolymerisate bekannte Zusätze, wie Stabilisatoren, Pigmente, Entformungsmittel, Flammschutzmittel und/oder Antistatika, in den üblichen Mengen enthalten.

Die erfindungsgemäßen Formmassen, enthaltend die Komponenten 1), 2) 3) und gegebenenfalls 2.a.) und/oder weitere Zusätze, können hergestellt werden, indem man ihre Bestandteile in bekannter Weise vermischt und bei Temperaturen von 200-330 °C in üblichen Mischvorrichtungen, wie Innenknetern, Extru-

dern oder Doppelwellenschnecken, schmelzcompoundiert oder schmelzextrudiert.

Gegenstand der Erfindung ist auch ein Verfahren zur Herstellung von thermoplastischen Formmassen, enthaltend die Komponenten 1), 2), 3) und gegebenenfalls 2.a.). Stabilisatoren, Pigmente, Entformungsmittel, Flammschutzmittel und/oder Antistatika, das dadurch gekennzeichnet ist, daß man die Komponenten 1), 2), 3) und gegebenenfalls die Komponente 2.a.), Stabilisatoren, Pigmente, Entformungsmittel, Flammschutzmittel und/oder Antistatika in bekannter Weise vermischt und danach bei Temperaturen von 200 °C bis 330 °C in üblichen Mischvorrichtungen schmelzcompoundiert oder schmelzextrudiert.

Die Bestandteile können in bekannter Weise sowohl sukzessive als auch simultan vermischt werden bei etwa 20 °C (Raumtemperatur) und auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind Gehäuseteile für Haushaltsgeräte, Formteile für den Kfz-Innenraum und insbesondere für den Kfz-Außenbereich.

Eine weitere Form der Verarbeitung ist die Herstellung von Formkörpern durch Tiefziehen aus vorher hergestellten Platten oder Folien.

Teilchengröße bedeutet immer mittlere Teilchendurchmesser $d_{50}$, ermittelt durch Ultrazentrifugenmessungen nach W. Scholtan et al, Kolloid-Z. und Z. Polymere 250 (1972), 782-796.

## Beispiele

Eingesetzte Polykondensate und Polymerisate, wobei die Verbindungen A die Komponente 1), die Verbindungen B die Komponente 2), die Verbindung C die Komponente 2.a.) und die Verbindungen D die Komponente 3) repräsentieren.

A1. Polycarbonat auf Basis Bisphenol A mit einer relativen Lösungsviskosität $\eta_{rel}$ von 1,26 bis 1,28, gemessen in $CH_2Cl_2$ bei 25 °C und einer Konzentration von 0,5 g/100 ml.

A2. Polyestercarbonat mit einem Estergehalt von 50 Mol-% auf Basis von Bisphenol A, Iso- und Terephthalsäure (1:1) mit einer relativen Lösungsviskosität $\eta_{rel}$ von 1,30 gemessen in $CH_2Cl_2$ bei 25 °C und einer Konzentration von 0,5 g/100 ml.

B1. SAN-Pfropfpolymerisat von 50 Gew.-% Styrol/Acrylnitril-Gemisch (im Gewichtsverhältnis 72:28) auf 50 Gew.-% teilchenförmiges Polybutadien mit einem mittleren Teilchendurchmesser ($d_{50}$) von 0,4 $\mu$m, erhalten durch Emulsionspolymerisation

B2. SAN-Pfropfpolymerisat von 50 Gew.-% Styrol/Acrylnitril-Gemisch (im Gewichtsverhältnis 72:28) auf 50 Gew.-% teilchenförmiges Polysiloxan mit einem mittleren Teilchendurchmesser ($d_{50}$) von 0,3 $\mu$m, erhalten durch Emulsionspolymerisation.

C. Styrol/Acrylnitril-Copolymerisat mit einem Styrol-Acrylnitril-Verhältnis von 72:28 und einer Grenzviskosität $[\eta]$ = 0,55 dl/g, gemessen in Dimethylformamid bei 20 °C.

D1. Blockcopolymerisat vom Typ A-X-B, wobei A Polyneopentylglykolcarbonat und B Poly-$\epsilon$-caprolacton darstellen. X bezeichnet ein "getapertes" Übergangssegment aus Neopentylglykolcarbonat und $\epsilon$-Caprolacton. Das Blockcopolymerisat wurde durch ringöffnende anionische Copolymerisation von Neopentylglykolcarbonat und $\epsilon$-Caprolacton erhalten. Das Gewichtsverhältnis der Monomeren Neopentylglykolcarbonat und $\epsilon$-Caprolacton im Blockcopolymerisat beträgt 92:8 (ermittelt durch $^1$H-NMR-Spektroskopie). Die relative Lösungsviskosität $\eta_{rel}$ des Blockcopolymerisats beträgt 3,09 (2 gew.-%-ige Lösung in $CH_2Cl_2$ bei 20 °C).

D2. wie D1.
Gewichtsverhältnis Neopentylglykolcarbonat: $\epsilon$-Caprolacton = 76:24; $\eta_{rel}$ = 3,54.

D3. wie D1.
Gewichtsverhältnis Neopentylglykolcarbonat: $\epsilon$-Caprolacton = 50:50; $\eta_{rel}$ = 3,67.

D4. wie D1.
Gewichtsverhältnis Neopentylglykolcarbonat: $\epsilon$-Caprolacton = 90:10; $\eta_{rel}$ = 2,51.

D5. wie D1.
Gewichtsverhältnis Neopentylglykolcarbonat: $\epsilon$-Caprolacton = 82:18; $\eta_{rel}$ = 3,17.

D6. wie D1.
Gewichtsverhältnis Neopentylglykolcarbonat: $\epsilon$-Caprolacton = 63:37; $\eta_{rel}$ = 4,02.

E. Phosphorigsäureester des Bis(2-hydroxy-3-cyclohexyl-5-methyl-phenyl)methans als Stabilisator.

Die Komponenten wurde in einem 1,3-l-Innenkenter compoundiert.

Die Formkörper wurden mit einer Spritzgußmaschine bei 260 °C bzw. 280 °C hergestellt.

Die Kerbschlagzähigkeit $a_k$ nach Izod wurde an Stäben der Abmessung 80x10x4 mm gemäß ISO 180 1A bei den in den Beispielen angegebenen Temperaturen bestimmt.

Die Fließfähigkeit wurde beurteilt über den bei der verwendeten Spritzgußmaschine (Massetemperatur: 260 °C, 280 °C) notwendigen Fülldruck (s. Johannaber, Kunststoffe 74 (1984, 1; S. 1-5) zur Herstellung von Stäben der Abmessung 80x10x4 mm.

Das Spannungsgrißverhalten wurde an Stäben der Abmessung 80x10x4 mm, Massetemperatur 260 °C untersucht. Als Kraftstoffsimulanz wurde eine Mischung auf 50 % Toluol und 50 % Isooctan verwendet. Die Probekörper wurden mittels einer Kreisbogenschablone vorgedehnt und 5 min bei Zimmertemperatur im Kraftstoffsimultant gelagert. Die Vordehnung $\epsilon_x$ betrug 0,2-2,4 %. Das Spannungsrißverhalten wurde über die Rißbildung bzw. den Bruch in Abhängigkeit der Vordehnung beurteilt.

Die Zusammensetzung der geprüften Materialien sowie die erhaltenen Daten sind in den folgenden Tabellen zusammengefaßt:

Tabelle 1

| Komponenten | erfindungsgemäße Beispiel (Gew.-Teile) 1 | 2 | 3 | Vergleichsbeispiel (Gew.-Teile) 4 |
|---|---|---|---|---|
| A 1. | 60 | 60 | 60 | 60 |
| B 1. | 24 | 24 | 24 | 24 |
| C. | 16 | 16 | 16 | 16 |
| D 1. | 2 | - | - | - |
| D 2. | - | 2 | - | - |
| D 3. | - | - | 2 | - |

| Prüfungen | 1 | 2 | 3 | 4 |
|---|---|---|---|---|
| Kerbschlagzähigkeit $a_k$ | | | | |
| $a_k$ (RT) ($KJ/m^2$) ($260^0 C$) | 56 | 56 | 67 | 54 |
| $a_k$ (-30°C) ($kj/m^2$) ($260^0 C$) | 49 | 58 | 64 | 45 |
| Fülldruck (bar) | | | | |
| bei $260^0 C$ | 78 | 79 | 77 | 102 |
| bei $280^0 C$ | 50 | 52 | 50 | 69 |

Tabelle 2

| Komponenten | erfindungsgemäße Beispiel (Gew.-Teile) 5 | Vergleichsbeispiel (Gew.-Teile) 6 |
|---|---|---|
| A 1. | 40 | 40 |
| A 2. | 40 | 40 |
| B 2. | 20 | 20 |
| D 3. | 2,5 | - |

| Prüfungen | 5 | 6 |
|---|---|---|
| Kerbschlagzähigkeit $a_k$ | | |
| $a_k$ (RT) ($KJ/m^2$) | 48 | 49 |
| $a_k$ ($-30^0 C$) ($KJ/m^2$) | 37 | 41 |
| ($280^0 C$) | | |
| Fülldruck (bar) | | |
| bei $280^0 C$ | 122 | 145 |
| bei $300^0 C$ | 75 | 95 |

Tabelle 3

| Komponenten | erfindungsgemäße Beispiel (Gew.-Teile) 7 | 8 | 9 | Vergleichsbeispiel (Gew.-Teile) 10 |
|---|---|---|---|---|
| A 1. | 65 | 65 | 65 | 65 |
| B 1. | 20 | 20 | 20 | 20 |
| C. | 10 | 5 | - | 15 |
| D 4. | 5 | 10 | 15 | - |

| Prüfungen | 7 | 8 | 9 | 10 |
|---|---|---|---|---|
| Kerbschlagzähigkeit $a_k$ | | | | |
| $a_k$ (RT) ($KJ/m^2$) | 76 | 84 | 80 | 54 |
| ($260^0$ C) Fülldruck (bar) bei $260^0$ C | 96 | 78 | 70 | 111 |
| Spannungsrißverhalten | | | | |
| KR/OR* bei Vordehnung $\epsilon_x$ (%) | 0,4 | 0,6 | 1,0 | - |
| Bruch bei Vordehnung $\epsilon_x$ (%) | 0,6 | 1,0 | - | 0,4 |
| kein Bruch bei Vordehnung $\epsilon_x$ (%) | - | - | 2,4 | - |

* KR/OR: Kanten/Oberrisse

Tabelle 4

| Komponenten | erfindungsgemäße Beispiel (Gew.-Teile) 11 | 12 | Vergleichsbeispiel (Gew.-Teile) 13 |
|---|---|---|---|
| A 1. | 60 | 60 | 60 |
| B 1. | 24 | 24 | 24 |
| C. | - | - | 16 |
| D 5. | 16 | - | - |
| D 6. | - | 16 | - |
| E. | 0,25 | 0,25 | 0,25 |

| Prüfungen | 11 | 12 | 13 |
|---|---|---|---|
| Kerbschlagzähigkeit $a_k$ | | | |
| $a_k$ (RT) (KJ/m²) | 49 | 49 | 47 |
| $a_k$(-40° C)(KJ/m²) | 45 | 41 | 33 |
| Fülldruck (bar) bei 260° C | 57 | 60 | 80 |
| Spannungsrißverhalten | | | |
| KR/OR* bei Vordehnung $\varepsilon_x$ (%) | 1,4 | 1,4 | 0,4 |
| Bruch bei Vordehnung $\varepsilon_x$ (%) | - | - | 0,6 |
| kein Bruch bei Vordehnung $\varepsilon_x$ (%) | 2,4 | 2,4 | - |

* KR/OR: Kanten/Oberrisse

## Patentansprüche

**1.** Thermoplastische Formmassen enthaltend

1.) thermoplastische, aromatische Polycarbonate und/oder thermoplastische aromatische Polyester,

2.) Pfropfpolymerisate, enhältlich durch Pfropfung von 2.1.) 5 bis 90 Gew.-Teilen einer Mischung aus

2.1.1.) 50 bis 95 Gew.-Teilen Styrol, α-Methylstyrol, kernsubstituiertem Styrol, Methylmethacrylat oder Mischungen daraus und

2.1.2.) 50 bis 5 Gew.-Teilen Acrylnitril, Methacrylnitril, Methylmethacrylat, Maleinsäureanhydrid, N-substituiertem Maleinimid oder Mischungen daraus auf

2.2.) 95 bis 10 Gew.-Teile eines Kautschuks mit einer Glastemperatur $T_G \leqq 10\,°C$,

3.) spezielle Copolymere und gegebenenfalls

2.a) thermoplastische Copolymerisate, enhältlich durch Copolymerisation von

2.a.1.) 50 bis 95 Gew.-Teilen Styrol, α-Methylstyrol, kernsubstituiertem Styrol, Methylmethacrylat oder Mischungen daraus mit

2.a.2.) 50 bis 5 Gew.-Teilen Acrylnitril, Methacrylnitril, Methylmethacrylat, N-substituiertem Maleinimid oder Mischungen daraus,

dadurch gekennzeichnet, daß die speziellen Copolymeren gemäß Komponente 3.) der Formel (Ia) entsprechen,

$\{A - X - B\}_r$ (Ia)

worin r eine ganze Zahl von 1 bis 20 ist,

-A- Polymerisate cyclischer Carbonate der Formel (V)

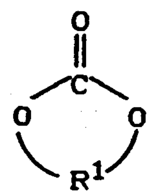

(V)

und/oder der Formel (VI)

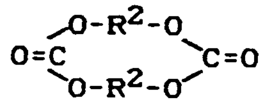

(VI)

darstellt,

-B- Polymerisate von Lactonen der Formel (VII)

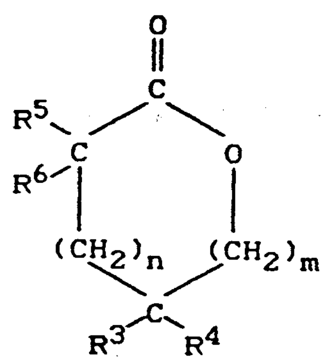

(VII)

darstellt und

-X- Polymerisate darstellt, die sowohl die Carbonate (V) und/oder (VI) als auch die Lactone (VII) in polymerisierter Form enthalten, wobei die Konzentration der polymerisierten Carbonate (V) und/oder (VI) jeweils in Richtung auf die Blöcke -B-und die Konzentration der polymerisierten Lactone (VII) jeweils in Richtung auf die Blöcke -A-kontinuierlich abnimmt ("tapered structure"),

und wobei

$R^1$ in (V) ein lineares $C_3$-$C_{10}$-Alkylen, oder ein Rest der Formeln a) bis l)

a) $-CH_2CH_2CH(CH_3)-$

b) $-CH_2CH_2OCH_2CH_2OCH_2CH_2-$,

c) $-CH_2CH(CH_3)CH_2CH_2C(CH_3)_2CH_2-$,

d) 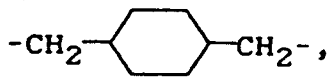, e) 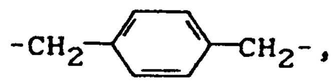,

f) 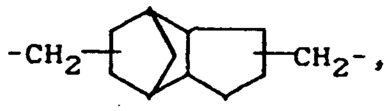,

g) 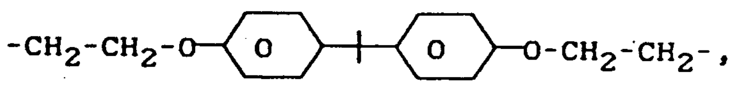,

h) 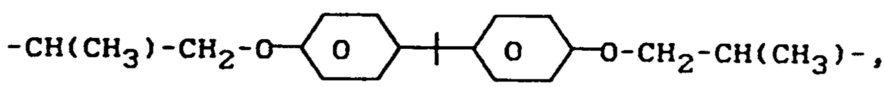,

i) 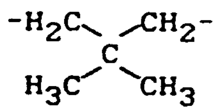, j) 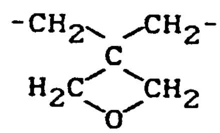,

k) 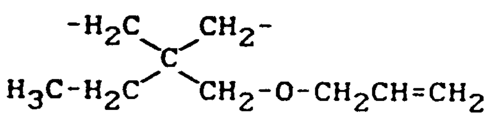,

l) 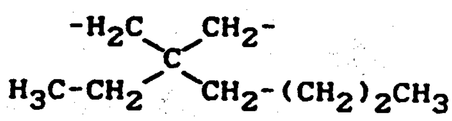

ist,

$R^2$ in (VI) ein lineares $C_4$-$C_{12}$-Alkylen oder ein Rest der Formeln m) oder b)

m) $-CH_2-CH_2-O-CH_2-CH_2-$ oder

b) $-CH_2-CH_2-O-CH_2-CH_2-O-CH_2-CH_2-$ ist

und wobei

$R^3$, $R^4$, $R^5$ und $R^6$ in (VII) gleich oder verschieden und H, $C_1$-$C_6$-Alkyl, $C_3$-$C_6$-Alkylen, $C_1$-$C_6$- Alkoxy und $C_2C_6$-Alkylenoxy-$C_1$-$C_6$-alkyl sind und wobei

"m" und "n" in (VII) unabhängig voneinander 0, 1, 2, 3, 4, 5 oder 6 sind.

**2.** Formmassen gemäß Anspruch 1, dadurch gekennzeichnet, daß Komponente 3.) in Mengen von 0,5 bis 45 Gew.-Teilen, bezogen auf 100 Gewichtsteile der Formmasse bestehend aus den Komponenten 1)+2)+3) und gegebenenfalls 2.a.), enthalten ist.

**3.** Formmassen gemäß Anspruch 2, dadurch gekennzeichnet, daß die Komponente 3.) in Mengen von 1 bis 35 Gew.-Teilen enthalten ist.

**4.** Formmassen gemäß Anspruch 3, dadurch gekennzeichnet, daß die Komponente 3.) in Mengen von 1,5 bis 22 Gew.-Teilen enthalten ist.

5. Formmassen gemäß Anspruch 1, dadurch gekennzeichnet, daß im Copolymer der Formel (Ia) r eine ganze Zahl von 1 bis 10 ist.

6. Formmassen gemäß Anspruch 1, dadurch gekennzeichnet, daß die Komponente 1.) ein thermoplastisches Polycarbonat auf Basis der Diphenole der Formel (VIII)

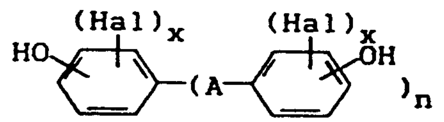

(VIII),

worin

A eine Einfachbindung, $C_1$-$C_5$-Alkylen, $C_2$-$C_5$-Alkyliden, ein $C_5$-$C_6$-Cycloalkyliden, -S-, -$SO_2$- oder ein Rest

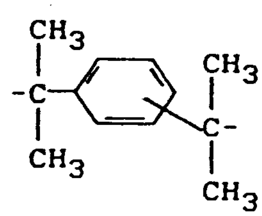

ist,

Hal Chlor oder Brom ist,

x 0, 1 oder 2 und

n 1 sind,

und gegebenenfalls zusätzlich der Formel (VIIIa)

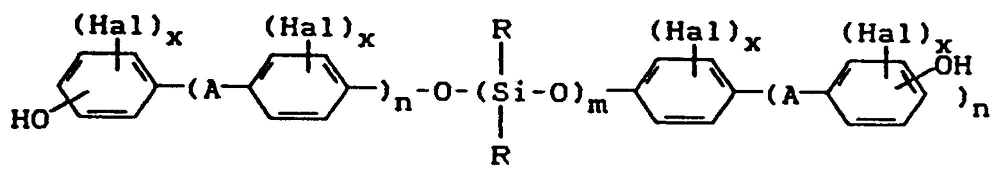

(VIIIa)

worin

A, Hal, x und n die für die Formel (VIII) genannte Bedeutung haben, die Reste R gleich oder verschieden sind und lineares $C_1$-$C_{10}$-Alkyl, verzweigtes $C_3$-$C_{20}$-Alkyl, $C_6$-$C_{20}$-Aryl, vorzugsweise $CH_3$, entsprechen und m eine ganze Zahl zwischen 5 und 100, vorzugsweise zwischen 20 und 80 ist.

7. Formmassen gemäß Anspruch 1, dadurch gekennzeichnet, daß die Komponente 1) ein thermoplastischer aromatischer Polyester auf Basis von $C_6$-$C_{30}$-Diphenolen, aromatischen $C_8$-$C_{14}$-Dicarbonsäuren, Kettenabbrechern und gegebenenfalls Kohlensäurehalogeniden und/oder Verzweigern ist.

8. Formmassen gemäß Anspruch 7, dadurch gekennzeichnet, daß die Komponente 1 ein thermoplastisches, aromatisches Polyestercarbonat ist.

9. Formmassen gemäß Anspruch 1, dadurch gekennzeichnet, daß sie zusätzich Stabilisatoren, Pigmente, Entformungsmittel, Flammschutzmittel und/oder Antistatika enthalten.

**10.** Verfahren zur Herstellung der Formmassen der Ansprüche 1 bis 9, dadurch gekennzeichnet, daß man die Komponenten 1), 2), 3) und gegebenenfalls die Komponenten 2.a.), Stabilisatoren, Pigmente, Entformungsmittel, Flammschutzmittel und/oder Antistatika in bekannter Weise vermischt und danach bei Temperaturen von 200 °C bis 330 °C in üblichen Mischvorrichtungen schmelzcompoundiert oder schmelzextrudiert.

## Claims

**1.** Thermoplastic moulding compounds containing

1.) thermoplastic aromatic polycarbonates and/or thermoplastic aromatic polyesters,

2.) graft polymers obtainable by grafting of

2.1.) 5 to 90 parts by weight of a mixture of

2.1.1.) 50 to 95 parts by weight styrene, α-methyl styrene, nucleus-substituted styrene, methyl methacrylate or mixtures thereof and

2.1.2.) 50 to 5 parts by weight acrylonitrile, methacrylonitrile, methyl methacrylate, maleic anhydride, N-substituted maleic imide or mixtures thereof onto

2.2.) 95 to 10 parts by weight of a rubber having a glass temperature $T_G \leqq 10\,°C$

3.) special copolymers and optionally

2.a) thermoplastic copolymers obtainable by copolymerization of

2.a.1.) 50 to 95 parts by weight styrene, α-methyl styrene, nucleus-substituted styrene, methyl methacrylate or mixtures thereof with

2.a.2.) 50 to 5 parts by weight acrylonitrile, methacrylonitrile, methyl methacrylate, N-substituted maleic imide or mixtures thereof,

characterized in that the special copolymers of component 3.) correspond to formula (Ia)

$$\{A - X - B\}_r$$

in which r is an integer of 1 to 20,

-A- represents polymers of cyclic carbonates corresponding to formula (V)

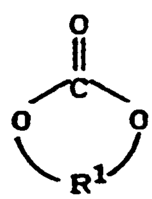

(V)

and/or to formula (VI)

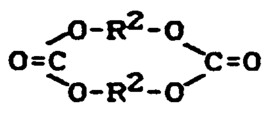

(VI)

-B- represents polymers of lactones corresponding to formula (VII)

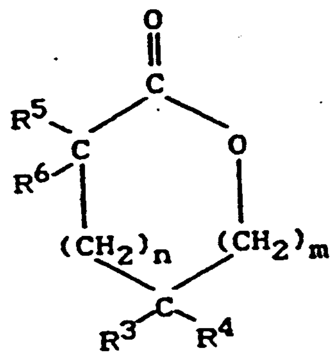

(VII)

and

-X- represents polymers containing both the carbonates (V) and/or (VI) and the lactones (VII) in polymerized form, the concentration of the polymerized carbonates (V) and/or (VI) decreasing continuously towards the blocks -B- and the concentration of the polymerized lactones (VII) decreasing continuously towards the blocks -A-("tapered structure"),

$R^1$ in (V) is a linear $C_{3-10}$ alkylene radical or a radical corresponding to formulae a) to l)

a) $-CH_2CH_2CH(CH_3)-$

b) $-CH_2CH_2OCH_2CH_2OCH_2CH_2-$,

c) $-CH_2CH(CH_3)CH_2CH_2C(CH_3)_2CH_2-$,

d) 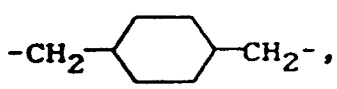 e) 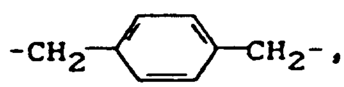

f) 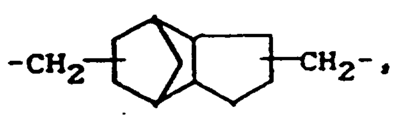

g) 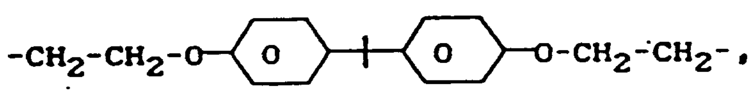

h) 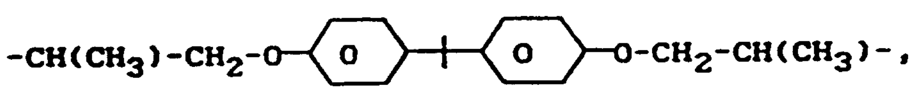

i) 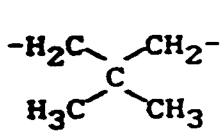 , j) 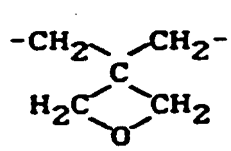 ,

k) 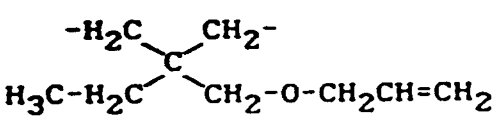 ,

l) 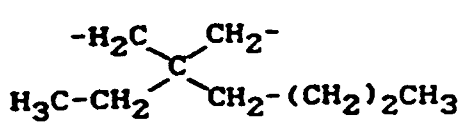

$R^2$ in (VI) is a linear $C_{4-12}$ alkylene or a radical corresponding to formulae m) or b)

m) $-CH_2-CH_2-O-CH_2-CH_2-$ or

b) $-CH_2-CH_2-O-CH_2-CH_2-O-CH_2-CH_2-$

and

$R^3$, $R^4$, $R^5$ and $R^6$ in (VII) may be the same or different and represent H, $C_{1-6}$ alkyl, $C_{3-6}$ alkylene, $C_{1-6}$ alkoxy and $C_{2-6}$ alkyleneoxy-$C_{1-6}$-alkyl and "m" and "n" in (VII) independently of one another are 0, 1, 2, 3, 4, 5 or 6.

**2.** Moulding compounds as claimed in claim 1, characterized in that component 3.) is present in quantities of 0.5 to 45 parts by weight, based on 100 parts by weight of the moulding compound consisting of components 1) + 2) + 3) and, optionally 2.a.).

**3.** Moulding compounds as claimed in claim 2, characterized in that component 3.) is present in quantities of 1 to 35 parts by weight.

**4.** Moulding compounds as claimed in claim 3, characterized in that component 3.) is present in quantities of 1.5 to 22 parts by weight.

**5.** Moulding compounds as claimed in claim 1, characterized in that, in the copolymer of formula (Ia), r is an integer of 1 to 10.

**6.** Moulding compounds as claimed in claim 1, characterized in that component 1.) is a thermoplastic polycarbonate based on diphenols corresponding to formula (VIII)

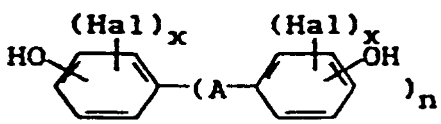

(VIII),

in which

A is a single bond, $C_{1-5}$ alkylene, $c_{2-5}$ alkylidene, a $C_{5-6}$ cycloalkylidene, -S-, $-SO_2-$ or a radical of the formula

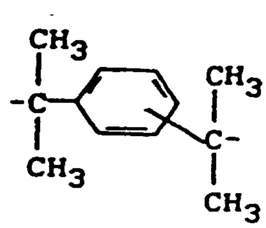

Hal is chlorine or bromine

x = 0, 1 or 2 and

n = 1,

and, optionally, to formula (VIIIa)

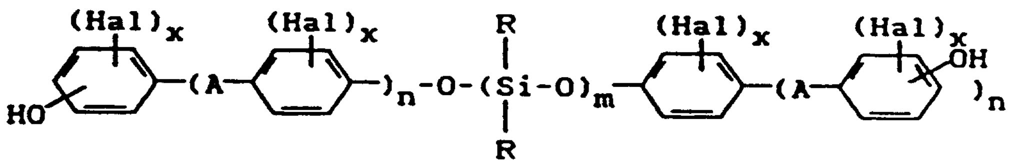

(VIIIa)

in which
A, Hal, x and n are as defined for formula (VIII), the substituents R may be the same or different and represent linear $C_{1-10}$ alkyl, branched $C_{3-20}$ alkyl, $C_{6-20}$ aryl, preferably $CH_3$, and m is an integer of from 5 to 100 and preferably from 20 to 80.

**7.** Moulding compounds as claimed in claim 1, characterized in that component 1) is a thermoplastic aromatic polyester based on $C_{6-30}$ diphenols, aromatic $C_{8-14}$ dicarboxylic acids, chain terminators and, optionally, carbonic acid halides and/or branching agents.

**8.** Moulding compounds as claimed in claim 7, characterized in that component 1) is a thermoplastic, aromatic polyester carbonate.

**9.** Moulding compounds as claimed in claim 1, characterized in that they additionally contain stabilizers, pigments, mould release agents, flameproofing agents and/or antistatic agents.

**10.** A process for the production of the moulding compounds claimed in claims 1 to 9, characterized in that components 1), 2), 3) and, optionally, component 2.a.), stabilizers, pigments, mould release agents, flameproofing agents and/or antistatic agents are mixed in known manner and the resulting mixtures are then melt-compounded or melt-extruded in standard mixing units at temperatures of 200 to 330 ° C.

## Revendications

**1.** Compositions à mouler thermoplastiques contenant
1.) des polycarbonates aromatiques thermoplastiques et/ou des polyesters aromatiques thermoplastiques,
2.) des polymères greffés obtenus par greffage de 2.1.) 5 à 90 parties en poids d'un mélange constitué
2.1.1.) de 50 à 95 parties en poids de styrène, d'α-méthylstyrène, de styrène substitué sur le noyau, de méthacrylate de méthyle ou de mélanges de ces composés et
2.1.2.) de 50 à 5 parties en poids d'acrylonitrile, de méthacrylonitrile, de méthacrylate de méthyle, d'anhydride d'acide maléique, de maléimide substitué sur l'azote ou de mélanges de ces composés sur
2.2.) 95 à 10 parties en poids d'un caoutchouc ayant une température $T_G$ de transition vitreuse inférieure ou égale à 10 ° C,
3.) des copolymères spéciaux et le cas échéant
2.a) des copolymères thermoplastiques obtenus par copolymérisation de
2.a.1.) 50 à 95 parties en poids de styrène, d'α-méthylstyrène, de styrène substitué sur le noyau, de méthacrylate de méthyle ou de mélanges de ces composés avec
2.a.2.) 50 à 5 parties en poids d'acrylonitrile, de méthacrylonitrile, de méthacrylate de méthyle, de maléimide substitué sur l'azote ou de mélanges de ces composés
caractérisées en ce que les copolymères spéciaux représentant le composant 3.) répondent à la formule (Ia)

$\{A - X - B\}_r$ (Ia)

dans laquelle r est un nombre entier de 1 à 20,
-A- représente des produits de polymérisation de carbonates cycliques de formule (V)

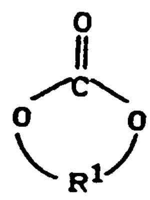

(V)

et/ou de formule (VI)

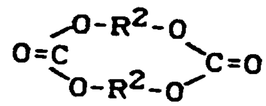

(VI)

-B- représente des produits de polymérisation de lactones, de formule (VII)

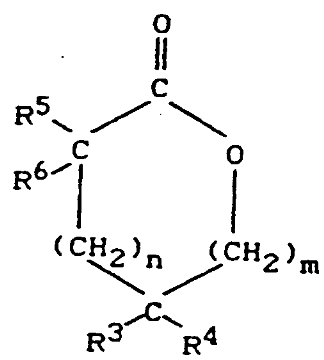

(VII)

et

-X- représente des produits de polymérisation qui contiennent tant les carbonates (V) et/ou (VI) que les lactones (VII) sous la forme polymérisée, la concentration des carbonates polymérisés (V) et/ou (VI) diminuant pour chacun d'eux de façon continue dans la direction des séquences -B- et la concentration des lactones polymérisées (VII) diminuant dans chaque cas de façon continue dans la direction des séquences - A- ("structure en dégradé"),

et

$R^1$ dans (V) représente un reste alkylène linéaire en $C_3$ à $C_{10}$ ou un reste de formules a) à l)

a) $-CH_2CH_2CH(CH_3)-$

b) $-CH_2CH_2OCH_2CH_2OCH_2CH_2-$,

c) $-CH_2CH(CH_3)CH_2CH_2C(CH_3)_2CH_2-$,

d) 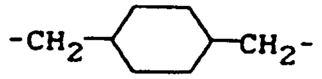 e) 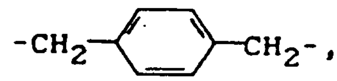

f) 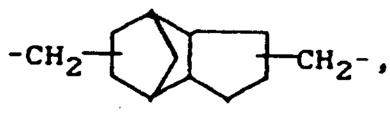

g) 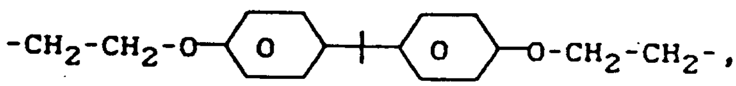

h) 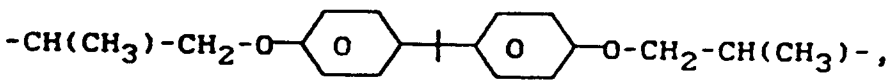

i) 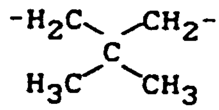 , j) 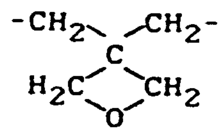 ,

k) 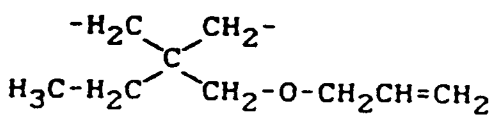 ,

l) 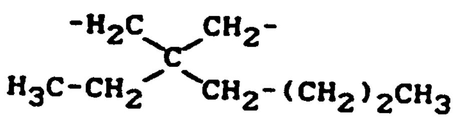

$R^2$ dans (VI) est un groupe alkylène linéaire en $C_4$ à $C_{12}$ ou un reste de formules m) ou b)

m) est un groupe $-CH_2-CH_2-O-CH_2-CH_2-$ ou bien

b) est un groupe $-CH_2-CH_2-O-CH_2-CH_2-O-CH_2-CH_2-$

et
$R^3$, $R^4$, $R^5$ et $R^6$ dans (VII) sont identiques ou différents et représentent H, un groupe alkyle en $C_1$ à $C_6$, alkylène en $C_3$ à $C_6$, alkoxy en $C_1$ à $C_6$ et (alkylèneoxy en $C_2$ à $C_6$)-(alkyle en $C_1$ à $C_6$) et "m" et "n" dans la formule (VII) ont indépendamment l'un de l'autre la valeur 0, 1, 2, 3, 4, 5 ou 6.

**2.** Compositions à mouler suivant la revendication 1, caractérisées en ce que le composant 3.) est contenu en quantités de 0,5 à 45 parties en poids, pour 100 parties en poids de la composition à mouler constituée des composants 1) + 2) + 3) et le cas échéant 2.a.).

**3.** Compositions à mouler suivant la revendication 2, caractérisées en ce que le composant 3.) est contenu en quantités de 1 à 35 parties en poids.

**4.** Compositions à mouler suivant la revendication 3, caractérisées en ce que le composant 3.) est contenu en quantités de 1,5 à 22 parties en poids.

**5.** Compositions à mouler suivant la revendication 1, caractérisées en ce que dans le copolymère de formule (Ia), r est un nombre entier de 1 à 10.

**6.** Compositions à mouler suivant la revendication 1, caractérisées en ce que le composant 1.) est un polycarbonate thermoplastique à base des diphénols de formule (VIII)

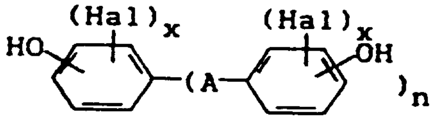

(VIII),

dans laquelle

A est une liaison simple, un groupe alkylène en $C_1$ à $C_5$, alkylidène en $C_2$ à $C_5$, cycloalkylidène en $C_5$ ou $C_6$, -S-, $-SO_2-$ ou un reste

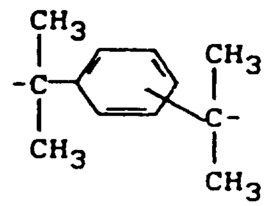

Hal représente le chlore ou le brome,
x a la valeur 0, 1 ou 2 et
n est égal à 1,

et en outre, le cas échéant, de formule (VIIIa)

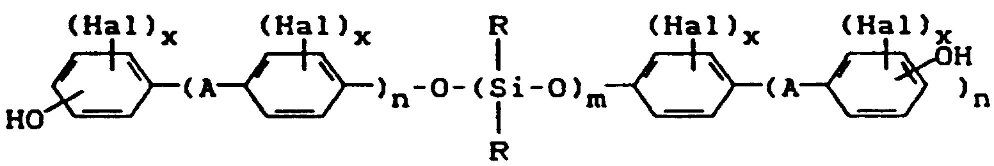

(VIIIa)

dans laquelle

A, Hal, x et n ont la définition indiquée pour la formule (VIII), les restes R sont identiques ou différents et représentent un groupe alkyle en $C_1$ à $C_{10}$ linéaire, un groupe alkyle en $C_3$ à $C_{20}$ ramifié, un groupe aryle en $C_6$ à $C_{20}$, de préférence $CH_3$, et m est un nombre entier compris entre 5 et 100, de préférence entre 20 et 80.

**7.** Compositions à mouler suivant la revendication 1, caractérisées en ce que le composant 1) est un polyester aromatique thermoplastique à base de diphénols en $C_6$ à $C_{30}$, d'acides dicarboxyliques aromatiques en $C_8$ à $C_{14}$, d'agents de terminaison de chaîne et le cas échéant d'halogénures d'acide carbonique et/ou d'agents de ramification.

**8.** Compositions à mouler suivant la revendication 7, caractérisées en ce que le composant 1 est un polyestercarbonate aromatique thermoplastique.

**9.** Compositions à mouler suivant la revendication 1, caractérisées en ce qu'elles contiennent en outre des agents stabilisants, des pigments, des agents de démoulage, des agents retardateurs de flamme et/ou des agents antistatiques.

**10.** Procédé de production des compositions à mouler suivant les revendications 1 à 9, caractérisé en ce qu'on mélange les composants 1), 2), 3) et le cas échéant les composants 2.a.), des agents stabilisants, des pigments, des agents de démoulage, des retardateurs de flamme et/ou des agents anti-statiques d'une manière connue puis on les formule à l'état fondu à des températures de 200 °C à 330 °C dans des dispositifs mélangeurs classiques ou on les extrude à l'état fondu.